# EUROPÄISCHE PATENTSCHRIFT

(11) **EP 1 516 135 B1**
(45) Veröffentlichungstag und Bekanntmachung des Hinweises auf die Patenterteilung: **10.01.2007**
(21) Anmeldenummer: 03759841.4
(22) Anmeldetag: 10.06.2003
(51) Int. Cl.: F16H 55/56

(54) **KEGELSCHEIBENUMSCHLINGUNGSGETRIEBE**
CONE DISC INFINITELY-VARIABLE GEARBOX
TRANSMISSION A VARIATION CONTINUE A DISQUES CONIQUES

(30) Priorität: 17.06.2002 DE 10226913
(43) Veröffentlichungstag der Anmeldung: 23.03.2005
(73) Patentinhaber: LuK Lamellen und Kupplungsbau Beteiligungs KG, 77815 Bühl (DE)
(72) Erfinder: WALTER, Bernhard, 77704 Oberkirch (DE)
(86) Internationale Anmeldenummer: PCT/DE2003/001908
(87) Internationale Veröffentlichungsnummer: WO 2003/106866

(56) Entgegenhaltungen:
- DE-A- 19 857 709
- DE-A- 19 857 710
- DE-A- 19 921 750
- US-A- 6 089 999

## Beschreibung

Die Erfindung betrifft ein Kegelscheibenumschlingungsgetriebe, wie es beispielsweise durch die DE 199 21 750 A, die DE 198 57 710 A, die DE 198 57 709 A oder die US-A-6 089 999 bekannt wurde. Die DE 198 57 710 A offenbart ein Kegelscheibenumschlingungsgetriebe mit allen Merkmalen des Oberbegriffes des unabhängigen Anspruchs 1.

Kegelscheibenumschlingungsgetriebe finden in jüngerer Zeit zunehmend Verwendung in Personenkraftwagen, da es gelungen ist, solche Getriebe mit ausreichendem Drehmomentübertragungsvermögen, guten akustischen Eigenschaften und hoher Lebensdauer zu entwickeln.

Mit zunehmendem Einsatz der Kegelscheibenumschlingungsgetriebe kommt deren Kosten sowie deren Alltagstauglichkeit steigende Bedeutung zu.

Der Erfindung liegt die Aufgabe zugrunde, Kegelscheibenumschlingungsgetriebe kostengünstiger und alltagstauglicher zu gestalten.

Die Lösung dieser Aufgabe wird mit einem Kegelscheibenumschlingungsgetriebe erreicht, das enthält eine Welle, eine vorzugsweise einteilig mit der Welle ausgebildeten Kegelscheibe, eine mit der Welle drehfest und axial verschiebbar verbundenen Kegelscheibe, einen im Abstand von einer Rückseite der verschiebbaren Kegelscheibe an der Welle axial unverschiebbar befestigten Stützring, eine radial innere, zwischen der Kegelscheibe und dem Stützring gebildete, in axialer Richtung veränderbare Druckkammer, die zur Verschiebung der Kegelscheibe über einen in der Welle ausgebildeten Durchlass mit Druckmittel beaufschlagbar ist, und eine radial äußere, in axialer Richtung veränderbare Druckkammer, die zur Verschiebung der Kegelscheibe über einen in der Welle ausgebildeten weiteren Durchlass mit Druckmittel beaufschlagbar ist, wobei der in der Welle ausgebildete weitere Durchlass über einen in der verschiebbaren Kegelscheibe ausgebildeten Durchlass mit der radial äußeren Druckkammer verbunden ist, und die Druckkammern durch eine axial gerichtete zylindrische Ringwand voneinander getrennt sind, wobei sich die radial äußere Druckkammer vollständig außerhalb des radialen Bereiches der radial inneren Durckkammer befindet.

In vorteilhafter Weise führt der weitere in der Welle ausgebildete Durchlass über einen zwischen der Kegelscheibe und der Welle ausgebildeten Ringraum in den in der verschiebbaren Kegelscheibe ausgebildeten Durchlass.

Weiter ist die radial äußere Druckkammer zur Kegelscheibe hin durch den Boden eines ringtopfartigen Wandteils mit einer radial inneren und radial äußeren axialen Ringwand begrenzt, welche Ringwände relativ zum Stützring unter Abdichtung axial beweglich sind, und der in der Kegelscheibe ausgebildete Durchlass durch eine Öffnung des Wandteils in die radial äußere Druckkammer führt.

Der Stützring ist vorteilhafter Weiser aus einem radial inneren und einem radial äußeren Ringteil zusammengesetzt, wobei Flächen des radial äußeren Ringteils die radiale äußere Druckkammer begrenzen.

Die Ringteile können als ein integraler Bauteil ausgebildet sein.

Alternativ können die Ringteile Blechformteile sein, die durch Presssitz miteinander verbunden sind.

Vorteilhafter Weise wird das radial äußere Ringteil bei Beaufschlagung der radial äußeren Druckkammer in eine formschlüssige Anlage an das radial innere Ringteil gedrängt.

Zwischen dem radial inneren Ringteil und der Kegelscheibe kann eine Schraubenfeder ohne plangeschliffene Endwindungen angeordnet sein.

Außerdem ist es von Vorteil, die axial verschiebbare Kegelscheibe, den Stützring, die äußere Ringwand sowie das äußere Ringteil jeweils baugleich für die Antriebs- und Abtriebsseite des Getriebes auszuführen, um die Anzahl der verschiedenen Bauteile zu reduzieren, bzw. die Herstellung kostengünstiger zu gestalten.

Aus dieser baugleichen Gestaltung ergibt sich ein weiterer Vorteil, nämlich, dass die Haube sowohl am antriebsseitigen als auch am abtriebsseitigen Scheibensatz angebracht werden kann.

Dazu ist allerdings in vorteilhafter Weise das Ende der radial äußeren Ringwand mit einer entsprechenden formschlüssigen oder kraftschlüssigen Aufnahmemöglichkeit vorzusehen, um die Haube an diesem anbringen zu können.

Eine weitere Ausgestaltung wird mit einem Kegelscheibenumschlingungsgetriebe erzielt, das enthält ein Kegelscheibenpaar mit einer Welle, einer vorzugsweise einteilig mit der Welle ausgebildeten Kegelscheibe, einer mit der Welle drehfest und axial verschiebbar verbundenen Kegelscheibe, einem im Abstand von einer Rückseite der Kegelscheibe an der Welle axial unverschiebbar befestigten Stützring, wenigstens einer zwischen dem Stützring und der Rückseite der axial verschiebbaren Kegelscheibe ausgebildeten Druckkammer, durch deren Beaufschlagung mit Hydraulikmitteldruck die axial verschiebbare Kegelscheibe verschiebbar ist, wobei in einem Schiebesitz zur verschiebbaren Abdichtung zwischen der Kegelscheibe und einem ortsfesten Bauteil ein Ringraum ausgebildet ist, in dem ein Dichtring angeordnet ist, welcher Ringraum zu einer Seite hin in einen Ringspalt übergeht und zur entgegengesetzten Seite hin über eine Phase in einen Dichtspalt übergeht.

Hinsichtlich der Senkung der Kosten ist ein Verfahren zum Festlegen des Spreizmaßes bei einem Kegelscheibenpaar eines Kegelscheibenumschlingungsgetriebes vorteihaft, welches Kegelscheibenpaar eine vorzugsweise einteilig mit einer Welle ausgebildete Kegelscheibe und eine mit der Welle drehfest und axial verschiebbar verbundene Kegelscheibe aufweist, die durch Druckbeaufschlagung wenigstens einer zwischen ihrer Rückseite und einem starr an der Welle befestigten Stützring angeordneten Druckkammer zu der anderen Kegelscheibe hin verschiebbar ist und sich in ihrer miximal von der anderen Kegelscheibe entfernten Position an dem Stützring abstützt, bei welchem Verfahren der Stützring ohne Anlage an einem radialen Anschlag der Welle bei an ihm anliegender verschiebbarer Kegelscheibe derart an der Welle axial unverschiebbar befestigt wird, dass ein vorbestimmter maximaler Abstand zwischen den Kegelscheiben eingehalten ist.

Ein weiteres Ausführungsbeispiel eines Kegelscheibenumschlingungsgetriebes enthält eine Welle, eine vorzugsweise einteilig mit der Welle ausgebildete Kegelscheibe, eine mit der Welle drehfest und axial verschiebbar verbundene Kegelscheibe, einen im Abstand von der Rückseite der Kegelscheibe an der Welle axial unverschiebbar befestigten Stützring, welche axial verschiebbare Kegelscheibe durch Druckbeaufschlagung wenigstens einer zwischen ihrer Rückseite und dem Stützring ausgebildeten Druckkammer zu der anderen Kegelscheibe hin verschiebbar ist und sich in ihrer maximal von der anderen Kegelscheibe entfernten Position an dem Stützring abstützt, wobei der Stützring ohne Anlage an einem radialen Anschlag der Welle bei an ihm anliegender verschiebbarer Kegelscheibe derart an der Welle axial unverschiebbar befestigt ist, dass ein vorbestimmter maximaler Abstand zwischen den Kegelscheiben eingehalten wird.

In vorteilhafter Weise ist der Stützring mit der Welle verschweißt.

In einer weiteren vorteilhaften Ausführungsform ist der Stützring an der Welle mittels wenigstens eines Bauteils axial formschlüssig festgelegt, das in eine im Außenumfang der Welle und eine im Innenumfang des Stützrings ausgebildete Ausnehmung eingreift.

Ein weiteres Beispiel eines Kegelscheibenumschlingungsgetriebes enthält eine Welle, eine vorzugsweise einteilig mit der Welle ausgebildete Kegelscheibe, eine mit der Welle drehfest und axial verschiebbar verbundene Kegelscheibe, einen im Abstand von einer Rückseite der Kegelscheibe an der Welle axial unverschiebbar befestigten Stützring, wenigstens einer zwischen dem Stützring und der Rückseite der axial verschiebbaren Kegelscheibe ausgebildeten Druckkammer, durch deren Beaufschlagung mit Hydraulikmitteldruck die axial verschiebbare Kegelscheibe zu der anderen Kegelscheibe hin verschiebbar ist, und wenigstens einen Massekörper, der derart angeordnet ist und mit der axial verschiebbaren Kegelscheibe und dem Stützring derart zusammenwirkt, dass infolge der auf ihn wirkenden Fliehkraft eine Kraft auf die verschiebbare Kegelscheibe ausgeübt wird, die der vom Hydraulikmitteldruck hervorgerufenen Kraft entgegenwirkt.

Der Massekörper kann Teil eines Hebels sein, der zwischen einem starr mit der axial verschiebbaren Kegelscheibe verbundenen, die Stützwand auf ihrer von der verschiebbaren Kegelscheibe abgewandten Seite überragenden Bauteil und dem Stützring angeordnet ist und mit zunehmender Drehzahl der Welle die axial verschiebbare Kegelscheibe in Richtung auf den Stützring drängt.

Bei einer anderen Ausführungsform ist der Massekörper über wenigstens ein Seil derart mit der axial verschiebbaren Kegelscheibe und dem Stützring verbunden, dass mit zunehmender Drehzahl der Welle die axial verschiebbare Kegelscheibe in Richtung auf den Stützring gezogen wird.

Bei einer abgeänderten Ausführungsform ist der Massekörper in einem Gelenkpunkt zwischen zwei Hebeln angeordnet, von denen einer mit einem starr mit der axial verschiebbaren Kegelscheibe verbundenen, die Stützwand auf ihrer von der verschiebbaren Kegelscheibe abgewandten Seite überragenden Bauteil gelenkig verbunden ist und der andere mit dem Stützring verbunden ist, so dass mit zunehmender Drehzahl der Welle die axial verschiebbare Kegelscheibe in Richtung auf den Stützring gedrängt wird.

Bei einer weiteren Ausführungsform ist der Massekörper längs einer starr mit dem Stützring oder der axial verschiebbaren Kegelscheibe verbundenen, schräg zur axialen Richtung verlaufenden Schrägfläche derart beweglich, dass bei einer radial auswärts gerichteten Bewegung des Massekörpers die axial verschiebbare Kegelscheibe in Richtung auf den Stützring gedrängt wird.

Bei einer nochmals weiteren Ausführungsform ist der Massekörper durch zwei parallel zur axialen Richtung der Welle benachbarte und bezüglich der axialen Richtung in Umfangsrichtung verlaufende Achsen drehbare, miteinander und mit je einer an dem Stützring und der axial verschiebbaren Kegelscheibe schräg befestigten Verzahnung kämmenden Zahnräder gebildet, die bei radialer Entfernung von der Achse der Welle die axial bewegliche Kegelscheibe in Richtung auf den Stützring drängen.

In vorteilhafter Weise sind um die Welle herum mehrere Massekörper im gegenseitigen Abstand angeordnet.

Eine weitere Ausgestaltung wird mit einem Kegeischeibenumschlingungsgetriebe erreicht, das enthält zwei in gegenseitigem radialen Abstand parallel zueinander angeordnete Kegelscheibenpaare mit jeweils einer Welle, einer vorzugsweise einteilig mit der Welle ausgebildeten Kegelscheibe, einer mit der Welle drehfest und axial verschiebbar verbundenen Kegelscheibe, einem im Abstand von einer Rückseite der Kegelscheibe an der Welle axial unverschiebbar befestigten Stützring, wenigstens einer zwischen dem Stützring und der Rückseite der axial verschiebbaren Kegelscheibe ausgebildeten Druckkammer, durch deren Beaufschlagung mit Hydraulikmitteldruck die axial verschiebbare Kegelscheibe verschiebbar ist, und einem die beiden Kegelscheibenpaare umschlingenden Umschlingungsmittel, wobei die Druckkammern derart mit Druckmittel beaufschlagbar sind, dass sich die Abstände zwischen den Kegelscheiben jedes Kegelscheibenpaares und damit die Radien, längs der das Umschlingungsmittel an den Kegelflächen der Kegelscheibenpaare läuft, gegensinnig ändern, welches Kegelscheibenumschlingungsgetriebe weiter eine Einrichtung enthält, die bei Ausfall des Hydraulikdruckes die Kegelscheiben wenigstens eines Kegelscheibenpaars derart voneinander entfernt, dass das Umschlingungsmittel an seinem Innenumfang mit einer inneren achsparallelen Umfangsfläche des Kegelscheibenpaares in Berührung kommt.

In vorteilhafter Weise ist bei einem solchen Kegelscheibenumschlingungsgetriebe die axiale Umfangsfläche mit einer Gleitbeschichtung versehen.

Das Kegelscheibenpaar, dessen Kegelscheiben sich bei Druckausfall voneinander entfernen, ist bevorzugt das abtriebsseitige Kegelscheibenpaar.

Die Einrichtung zum Entfernen der Kegelscheiben voneinander enthält beispielsweise eine Feder.

Eine weitere Ausführung zeigt ein Verfahren zum Schleppen eines Kegelscheibenumschlingungsgetriebes mit zwei in gegenseitigem radialem Abstand parallel zueinander angeordneten Kegelscheibenpaaren mit jeweils einer Welle, einer vorzugsweise einteilig mit der Welle ausgebildeten Kegelscheibe, einer mit der Welle drehfest und axial verschiebbar verbundenen Kegelscheibe, einem im Abstand von einer Rückseite der Kegelscheibe an der Welle axial unverschiebbar befestigten Stützring, wenigstens einer zwischen dem Stützring und der Rückseite der axial verschiebbaren Kegelscheibe ausgebildeten Druckkammer, durch deren Beaufschlagung mit Hydraulikmitteldruck die axial verschiebbare Kegelscheibe verschiebbar ist, und einem die beiden Kegelscheibenpaare umschlingenden Umschlingungsmittel, wobei die Druckkammer derart mit Druckmittel beaufschlagbar ist, dass sich die Abstände zwischen den Kegelscheiben jedes Kegelscheibenpaares und damit die Radien, längs der das Umschlingungsmittel an den Kegelflächen der Kegelscheibenpaare läuft, gegensinnig ändern, bei welchem Verfahren bei geschlepptem Kegelscheibenumschlingungsgetriebe die Kegelscheiben wenigstens eines Kegelscheibenpaars derart voneinander entfernt werden, dass das Umschlingungsmittel an seinem Innenumfang mit einer inneren achsparallelen Umfangsfläche des Kegelscheibenpaares in Berührung kommt.

Die Erfindung wird im Folgenden beispielsweise anhand schematischer Zeichnungen und mit weiteren Einzelheiten erläutert:

Es stellen dar:
Fig. 1 einen Längsschnitt durch einen Teil eines Kegelscheibenumschlingungsgetriebes, teilweise herkömmlich, teilweise efindungsgemäß
Fig. 2 das Detail II der Fig. 1,
Fig. 3 einen Längsschnitt durch einen Teil eines weiteren Kegelscheibenumschlingungsgetriebes,
Fig. 4 einen Längsschnitt durch einen Teil des abgewandelten Kegelscheibenumschlingungsgetriebes gemäß Fig. 3,
Fig. 5 in der oberen und unteren Hälfte zwei verschiedene Ausführungsformen eines Details der Fig. 4,
Fig. 6 verschiedene Ansichten eines Teils eines Kegelscheibenumschlingungsgetriebes mit einer ersten Ausführungsform einer mechanischen Fliehkrafteinrichtung,
Fig. 7-17 verschiedene Ausführungsformen der mechanischen Fliehkrafteinrichtung und
Fig. 18 ein Kegelscheibenpaar mit einer Feder zum Vergrößern des Abstandes zwischen den Kegelscheiben.
Fig. 19 ein antriebsseitiges Kegelscheibenpaar
Fig. 20 ein komplettes Kegelscheibenumschlingungsgetriebe.

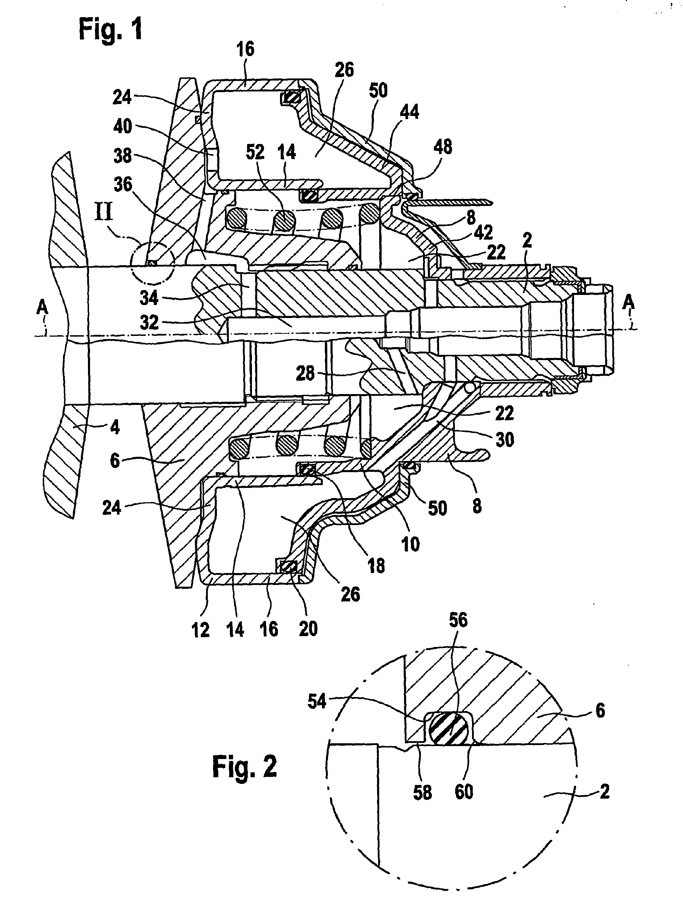

Fig. 1 zeigt einen Ausschnitt eines Kegelscheibenpaars eines Kegelscheibenumschlingungsgetriebes im axialen Längsschnitt, wobei die untere Hälfte der Fig. 1 eine herkömmliche Anordnung zeigt und die obere Hälfte eine erfindungsgemäße Anordnung. Eine Welle 2 eines Kegelscheibenpaares eines Kegelscheibenumschlingungsgetriebes, die eine Achse A-A hat, ist einteilig mit einer Kegelscheibe 4 ausgebildet. Im Abstand von der Kegelscheibe 4 ist auf der Welle A drehfest und axial verschiebbar eine weitere Kegelscheibe 6 angeordnet. Im Abstand von der Rückseite der Kegelscheibe 6 ist mit der Welle 2 starr ein Stützring 8 verbunden, vom dem in einem radial mittleren Bereich eine axial gerichtete zylindrische Ringwand 10 in Richtung auf die Kegelscheibe 6 vorsteht. Am radial äußeren Bereich der Rückseite der Kegelscheibe 6 liegt ein ringtopfartiges Wandteil 12 an oder ist daran befestigt, das radial innen und außen axial verlaufende, zylindrische Ringwände 14 und 16 aufweist, wobei die innere Ringwand 14 mittels eines Dichtrings 18 in abgedichteter Gleitberührung mit der Ringwand 10 ist und die äußere Ringwand 16 mittels eines Dichtrings 20 in abgedichteter Gleitberührung mit dem Außenumfang des Stützrings 8 ist. Auf diese Weise ist zwischen der Welle 2 und der Kegelscheibe 6 sowie den Ringwänden 10 und 14 eine innere Druckkammer 22 gebildet und zwischen den Ringwänden 10, 14 und 16 sowie dem Boden 24 des Wandteils 12 und dem radial äußeren Bereich des Stützrings 8 eine äußere Druckkammer 26 gebildet. Die Druckmittelversorgung der inneren Druckkammer 22 erfolgt über einen in der Welle 2 ausgebildeten Durchlass 28. Die Druckmittelbeaufschlagung der äußeren Druckkammer 26 erfolgt über in der Welle 2 ausgebildete Durchlässe und einen durch den Stützring 8 hindurch führenden Kanal 30. Aufbau und Funktion der beschriebenen Anordnung sind an sich bekannt und werden daher nicht erläutert.

Infolge des Kanals 30 ist der Stützring 8 ein verhältnismäßig komplexes, meistens als Schmiedeteil ausgebildetes Bauteil, das einerseits stabil sein muss, um als Stützwand für die Druckkammern bzw. die Kegelscheibe 6 zu wirken und andererseits genügend Materialvolumen aufweisen, damit der Kanal 30, der meist verzweigt ist, ausgebildet werden kann.

Die obere Hälfte der Fig. 1 unterscheidet sich von der unteren Hälfte dadurch, dass die Druckmittelzufuhr in die radial äußere Druckkammer 26 von in der Welle 2 ausgebildeten Durchlässen 32 und 34 über einen Ringraum 36 durch einen in der Kegelscheibe 6 ausgebildeten Kanal oder Durchlass 38 und von dort durch eine Öffnung 40 im Boden 24 des Wandteils 12 erfolgt, die in die äußere Druckkammer 26 führt. Es versteht sich, dass der Ringraum 36, der durch Ausnehmungen in der Welle 2 und/oder der Kegelscheibe 6 gebildet ist, axial so lang ist, dass die Verbindung vom. Durchlass 34 in den Durchlass 38 längs der gesamten Verschiebbarkeit der Kegelscheibe 6 erhalten bleibt. Der Durchlass 38 kann als eine Querbohrung ausgeführt sein.

Dadurch, dass die Druckmittelversorgung der äußeren Druckkammer 26 durch die axial verschiebbare Kegelscheibe 6 hindurch erfolgt, bestehen bezüglich der Gestaltung des Stützrings 8 große Freiheiten. Im dargestellten Beispiel ist der Stützring 8 aus zwei Blechformteilen 42 und 44 zusammengesetzt, die beispielsweise so, wie sie aus dem Formwerkzeug kommen, an der Stelle 48 aufeinander gepresst werden. Die mit den Ringwänden 14 und 16 des Wandteils 12 zusammenpassenden Sitzflächen können im montierten Zustand durch spanende Bearbeitung hergestellt werden. Das Blechformteil 44 wird, wie aus der Figur 1 nicht ersichtlich, im Betrieb infolge des Drucks in der Druckkammer 26 ständig gegen das Blechformteil 42 gedrängt (im Bereich der Pressung besteht bezüglich einer axialen Bewegung des Blechformteils 44 gemäß der Figur 1 nach rechts ein Formschluss), so dass es sich nicht lösen kann.

Die beiden Blechformteile können durch Schweißpunkte miteinander verbunden sein. Alternativ kann der Stützring 8 auch einteilig ausgebildet oder sonst wie hergestellt sein. Dadurch, dass er keinen Druckmitteldurchlass aufweist, bestehen große Gestaltungsfreiräume, wodurch der Stützring 8 kostensgünstig ausgeführt sein kann.

An dieser Stelle sei noch auf eine Haube 50 hingewiesen, die die äußere Ringwand 16 verlängert und zwischen sich und dem Stützring 8 eine Fliehölkammer bildet, in der sich mit steigender Drehzahl zunehmender Hydraulikdruck aufbaut, der dem in den Druckkammern 22, 26 wirkenden Druck bezüglich der Verschiebung der Kegelscheibe 6 entgegenwirkt.

Ein weiterer Vorteil, der mit der erfindungsgemäßen Ausbildung der oberen Hälfte der Fig. 1 erzielt wird, ist, dass eine in der radial inneren Druckkammer 22 angeordnete, als Druckfeder wirksame Schraubenfeder 52 infolge der großzügigeren Platzverhältnisse ohne plan geschliffene Endwindungen verbaut werden kann.

Fig. 2 zeigt den Ausschnitt 11 der Fig. 1 und damit die Ausbildung eines Schiebesitzes zwischen der axial verschiebbaren Kegelscheibe 6 und der Welle 2. In der inneren Umfangsfläche der Kegelscheibe 6 ist eine Ringnut 54 ausgebildet, in der ein Dichtring 56, beispielsweise ein O-Ring, angeordnet ist. Die innere Umfangsfläche der Kegelscheibe 6 ist gemäß Fig. 2 linksseitig der Ringnut 54 etwas zurückgenommen, so dass ein Ringspalt 58 bleibt, in dessen Bereich keine mechanische Anlage zwischen Kegelscheibe 6 und Welle 2 besteht. Auf der vom Ringspalt 58 abgewandten Seite geht die Ringnut 54 über eine Fase 60 in ihre zylindrische Innenumfangsfläche über, wobei der Bereich b der Anlage zwischen Kegelscheibe und Welle ständig mit Leckdruckmittel durchströmt ist und somit nicht verschleißt. Die Fase 60 dient dazu, die Abstützkraft zwischen Kegelscheibe 6 und Welle 2 von der Fase 60 etwas nach rechts zu verlagern, so dass im Bereich der Kante nicht die Gefahr von Materialausbrüchen besteht

Es versteht sich, dass der Schiebesitz auch dahingehend abgeändert werden kann, dass die Ringnut 54 nur in der Welle 2 oder sowohl in der Welle 2 als auch der Kegelscheibe 6 ausgebildet ist, wobei dann in der Fig. linksseitig des entstehenden, den Dichtring aufnehmenden Ringraums 36 der Ringspalt 58 ausgebildet ist und rechtsseitig im Übergang zu den Anlageflächen eine oder zwei Fasen ausgebildet sind.

Die Schiebesitzkonstruktion gemäß Fig. 2 kann auch bei weiteren der in Fig. 1 sichtbaren Schiebesitzen verwendet und an jedwelchen, hydraulisch betätigten Kegelscheibenumschlingungsgetrieben eingesetzt werden.

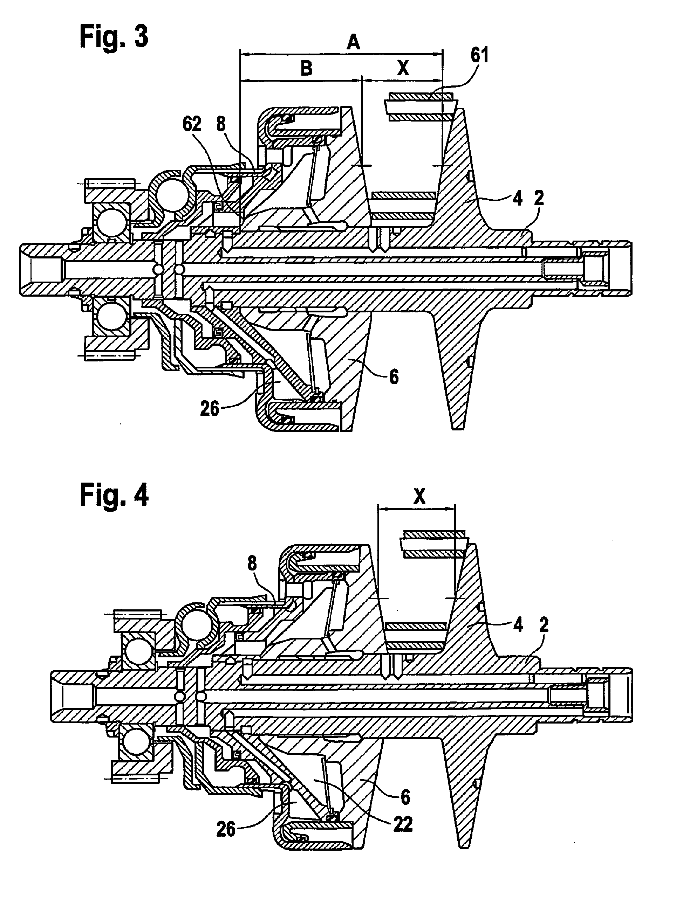

Ein Problem, das sich bezüglich der Maßhaltigkeit konventioneller Kegelscheibenumschlingungsgetriebe stellt, wird anhand der Fig. 3 erläutert. Die Konstruktion des Kegelscheibenpaares der Fig. 3 entspricht der, der unteren Hälfte der Fig. 1, wobei für funktionsgleiche Bauteile die gleichen Bezugszeichen verwendet sind. Zusätzlich ist in Fig. 3 eine Umschlingungskette 61 in ihrer radial äußersten und ihrer radial innersten Stellung gezeigt. Ein wichtiges Konstruktionsmaß ist das sogenannte Spreizmaß X, d.h. der maximale Abstand zwischen den Kegelflächen der Kegelscheiben 4 und 6 im radial mittleren Bereich der Kegelflächen. Dieses Spreizmaß X ist durch die Differenz der Maße A und B festgelegt. Das Maß A ist der axiale Abstand zwischen einem an der Welle 2 ausgebildeten und radialen Absatz 62 und der radialen Mitte der Kegelfläche der festen Kegelscheibe 4. Das andere Maß B ist der Abstand zwischen dem Absatz 62 und der radialen Mitte der Kegelfläche der Kegelscheibe 6. Das Maß B ist gleich der axialen Gesamtdicke der Kegelscheibe 6, die bei größtmöglichem Abstand zwischen den Kegelscheiben an dem Stützring 8 anliegt, der auf die Welle 2 in Anlage an den Absatz 62 aufgeschoben und in dieser Position befestigt ist. Bei der Fertigung des Getriebes treten sowohl bei der Herstellung der Kegelscheiben als auch der Welle Toleranzen auf, die das Maß X beeinflussen. Es versteht sich, dass das Spreizmaß auch an anderer Stelle als der radialen Mitte festgelegt werden kann.

Die Welle 2 gemäß Fig. 4 wird ohne den Absatz 62 ausgebildet und wird der Stützring 8 bei an ihm anliegender verschiebbarer Kegelscheibe 6 soweit auf die Welle 2 aufgeschoben, dass das Maß X eingehalten und in dieser Position an der Welle 2 starr befestigt ist.

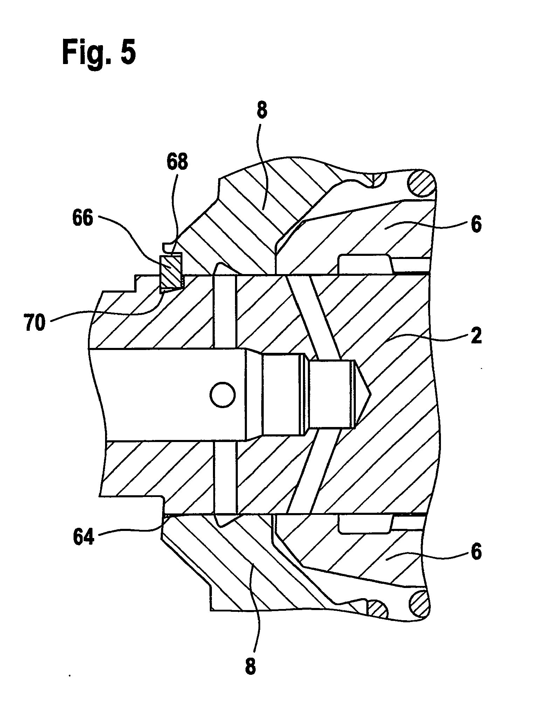

Die Befestigung kann durch eine Schweißung 64 (Fig. 5) oder mittels eines ein- oder mehrteiligen Fixierrings 66 erfolgen, der in entsprechende Ausnehmungen oder Nuten 68, 70 eingreift. Die axiale Dicke des bzw. der Fixierringe wird als Ergebnis einer entsprechenden Messung bestimmt, so dass ein Ring mit der entsprechenden Dicke oder mehrere Ringe, deren Dicke sich zu dem entsprechenden Maß addiert, eingesetzt wird bzw. werden.

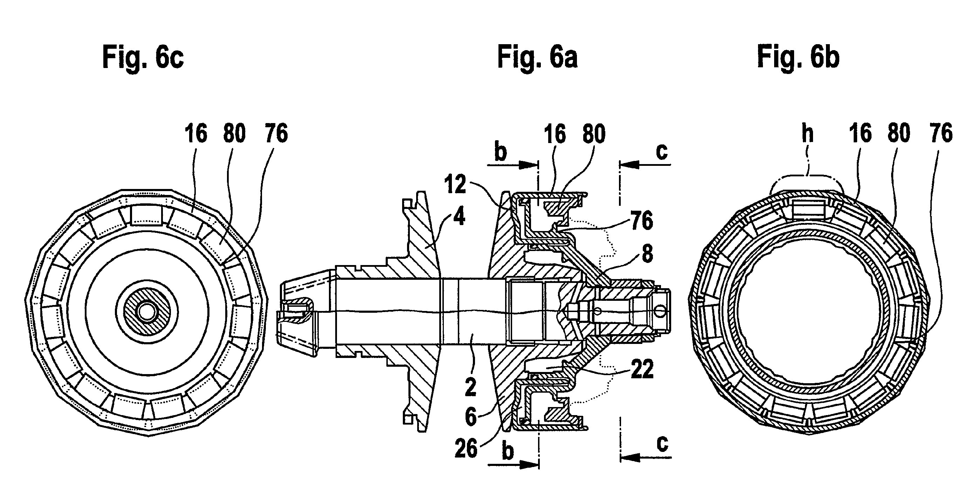

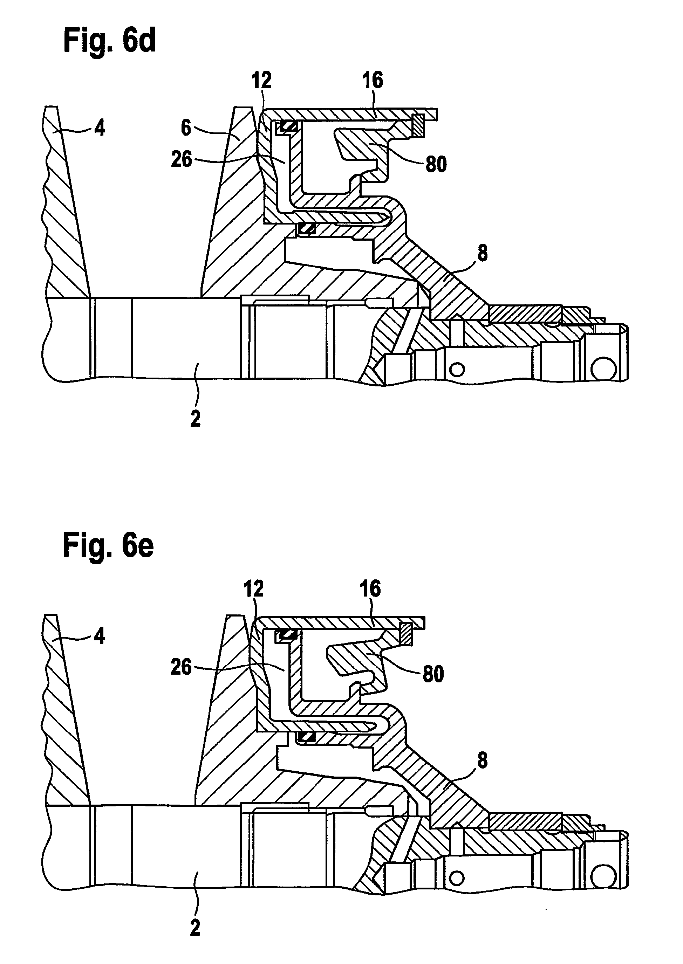

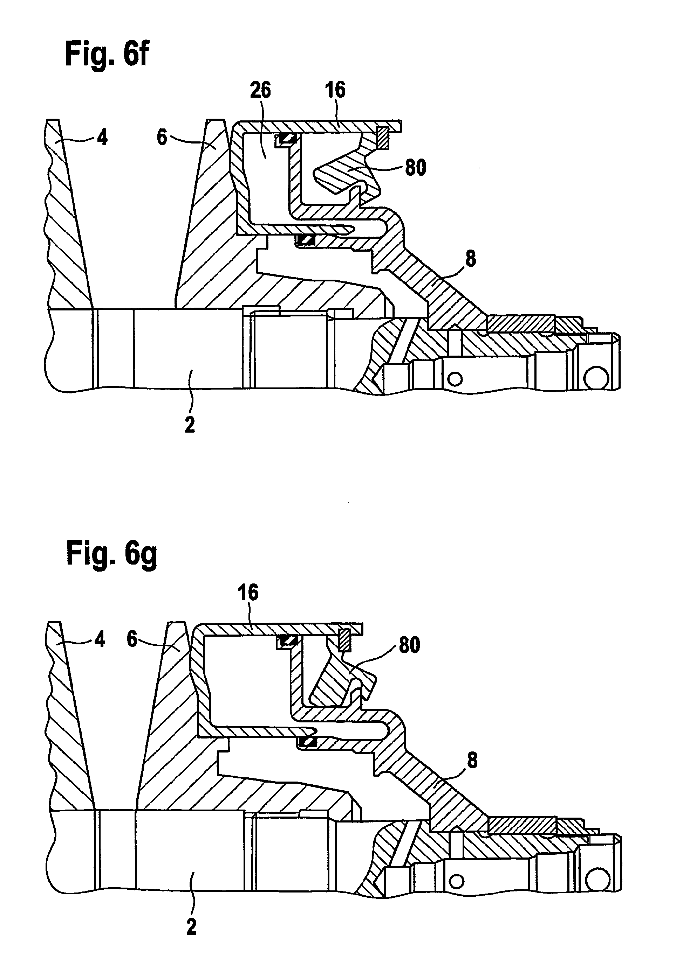

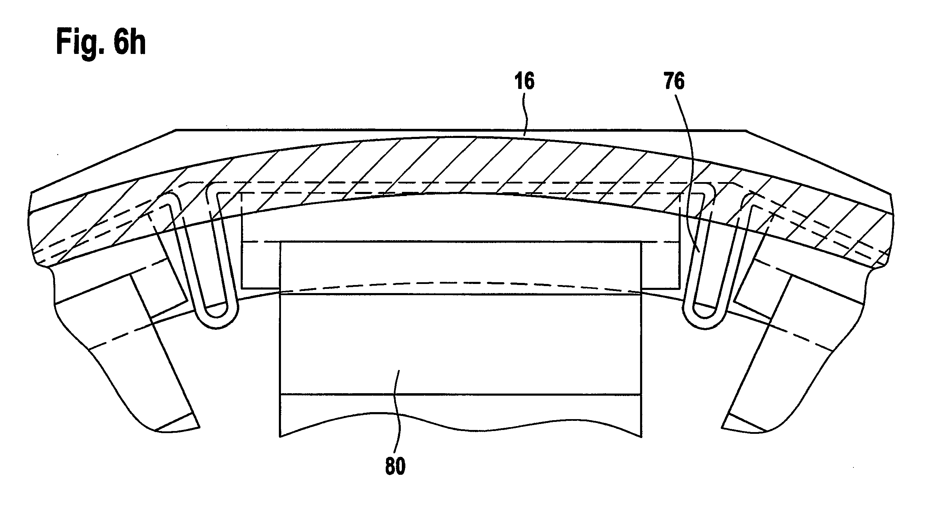

Die Lösung eines weiteren, bei Kegelscheibenumschlingungsgetrieben bestehenden Problems wird anhand der Fig. 6 bis 16 erläutert.

Wie bereits anhand der Fig. 1 erläutert, ist bei konventionellen Kegelscheibenumschlingungsgetrieben eine Haube 50 vorgesehen, zwischen der und der Außenseite des Stützrings 8 eine Fliehölkammer gebildet ist, deren Druck eine Kraft auf die Kegelscheibe 6 ausübt, die der von den Druckräumen 22 und 26 her ausgeübten Kraft entgegenwirkt. Infolge mit steigender Drehzahl zunehmender Zentrifugalkräfte nehmen die von den Druckräumen 22 und 26 her auf die Kegelscheibe 6 ausgeübten und diese in Richtung auf die Kegelscheibe 4 drängenden Kräfte zu. Diesen Kräften wird durch den Druck unterhalb der Fliehölhaube 50 entgegengewirkt, so dass Drehzahleinflüsse ausgeglichen werden. Die Ausbildung des Kegelscheibenumschlingungsgetriebes mit einer Fliehölhaube und einer zusätzlichen Öldruckkammer ist aufwendig. Nachfolgend werden Lösungen geschildert, mit denen der Drehzahleinfluss auf einfachere und funktionssichere Weise kompensiert werden kann.

Fig. 6a zeigt einen Schnitt durch ein Kegelscheibenpaar eines Kegelscheibenumschlingungsgetriebes, wobei für funktionsgleiche Teile die gleichen Bezugszeichen wie bisher verwendet werden.

Wie ersichtlich ist zwischen dem freien Ende der äußeren Ringwand 16 des Wandteils 12 und einem Ansatz 76 des Stützrings 8 ein Massekörper 80 gelenkig befestigt, dessen Schwerpunkt relativ zu den Anlenkpunkten derart angeordnet ist, dass eine gemäß Fig. 6a nach oben gerichtete Fliehkraft den Massekörper 80 in Uhrzeigerrichtung verdrehen will, d.h., die äußere Ringwand 16 und damit die Kegelscheibe 6 nach rechts gegen die aus den Druckkammern 22, 26 her wirkenden Druckkräfte bewegen will. Mit steigender Drehzahl nimmt diese Fliehkraft zu, so dass ein mit zunehmender Drehzahl zunehmender Druck in den Druckkammern kompensiert wird.

Fig. 6b zeigt einen Schnitt durch die Anordnung gemäß Fig. 6ä in der Ebene b-b. Fig. 6c zeigt eine Stirnansicht auf die Anordnung gemäß Fig. 6a in Richtung der Pfeile c-c. Wie ersichtlich, sind längs des Umfangs der äußeren Ringwand 16 und des Ringansatzes 76 mehrere Massekörper 80 verteilt. Es versteht sich, dass die Massekörper 80 lediglich am Ansatz 76 oder bevorzugt an der Ringwand 16 gelagert sein müssen, beispielsweise mittels eines an der Ringwand angebrachten Federrings.

Fig. 6d zeigt die Anordnung in Overdrive-Stellung des Kegelscheibenpaars, Fig. 6e in Topdrive-Stellung, Fig. 6f bei Übersetzung 1:1 und Fig. 6g in Underdrive-Stellung. Fg.6h zeigt den Ausschnitt h der Fg. 6b. Gegenüber dem hydraulischen Fliehkraftausgleich hat die mechanische Lösung folgende Vorteile:
- Sie ist kostengünstiger,
- Sie beansprucht weniger Bauraum im Lagerbereich (in Fig. 6a deutet die punktierte Linie den Bauraumbedarf einer hydraulischen Lösung an);
- Es wird Drucköl bzw. Hydraulikmittel eingespart;
- Man benötigt keine mechanische Anpressung (Druckfeder) mehr zum Abschleppen, da die axial verschiebbare Kegelscheibe beim Abschleppen infolge der Fliehkraft und vom Umschlingungsmittel von der Festscheibe weggezogen wird;
- Die Form und das Gewicht des Massekörpers, der im dargestellten Beispiel einen Hebel bildet, kann einfach an die jeweiligen Erfordernisse angepasst werden;
- Das Prinzip des mechanischen Fliehkraftausgleiches kann auch z.B. für einen Drehmomentfühler verwendet werden;
- Der mechanische Fliehkraftausgleich ist immer wirksam; es muss nicht die Befüllung des Fliehölraums abgewartet werden.

In den nachfolgenden Figuren stellt die obere Hälfte jeweils die Position in Overdrive (größtmöglicher Scheibenabstand) und die untere Figurenhälfte die Position der verschiebbaren Kegelscheibe (6) in Underdrive (kleinster Kegelscheibenabstand) dar.

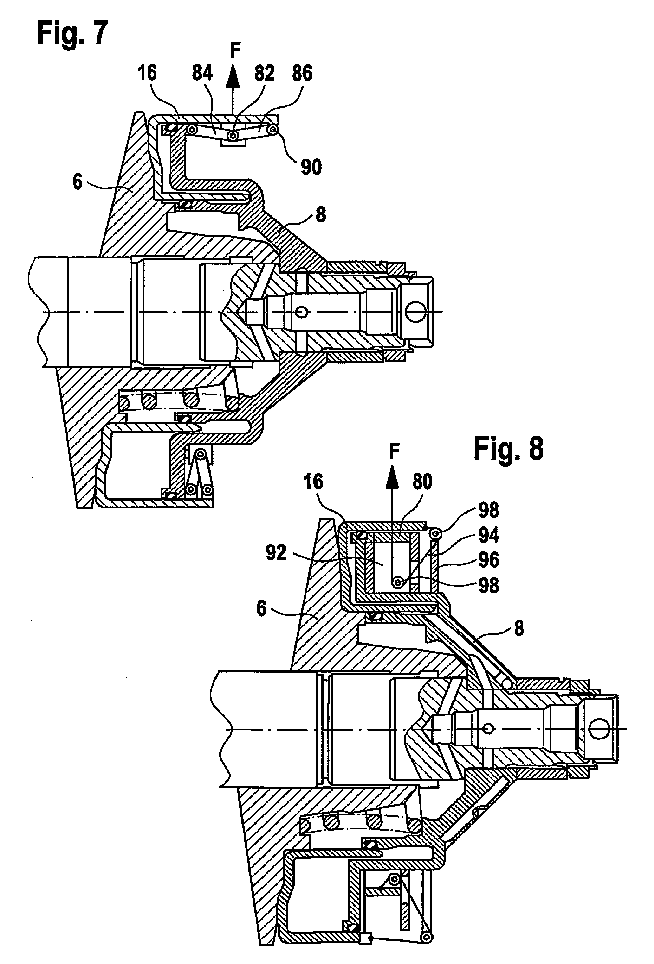

Bei der Ausführungsform gemäß Fig. 7 ist der Massekörper 80 in einem Gelenkpunkt 82 befestigt, in dem zwei Hebel 84 und 86 gelenkig miteinander verbunden sind, die bei 90 am radialen Außenrand des Stützrings 8 bzw. dem äußeren Ende der Ringwand 16 angelenkt sind. Wie ersichtlich, haben die Hebel 84 und 86 mit zunehmender Fliehkraft F das Bestreben, sich in die Strecklage zu bewegen, wodurch auf die Kegelscheibe 6 eine mit der Fliehkraft zunehmende Kraft gemäß Fig. 7 nach rechts ausgeübt wird. Es versteht sich, dass ebenso wie bei den nachfolgenden Ausführungsformen um den Umfang der Anordnung mehrere Massekörper 80 mit zugehörigen Hebeln verteilt sind.

Fig. 8 zeigt eine abgeänderte Ausführungsform, bei der der Massekörper 80 in einem radial auswärts zeigenden, am Stützring 8 befestigten Schacht 92 beweglich angeordnet ist und über ein Seil 94, das über an dem Schacht 92 bzw. einem Ansatz 96 des Stützrings 8 befestigten Rollen 98 mit der Ringwand 16 verbunden ist. Wie ohne weiteres ersichtlich, wirkt mit steigender, auf den Massekörper 80 wirkende Zentrifugalkraft F auf die starr mit der Ringwand 16 verbundene Kegelscheibe 6 eine gemäß Fig. 8 nach rechts wirkende Kraft.

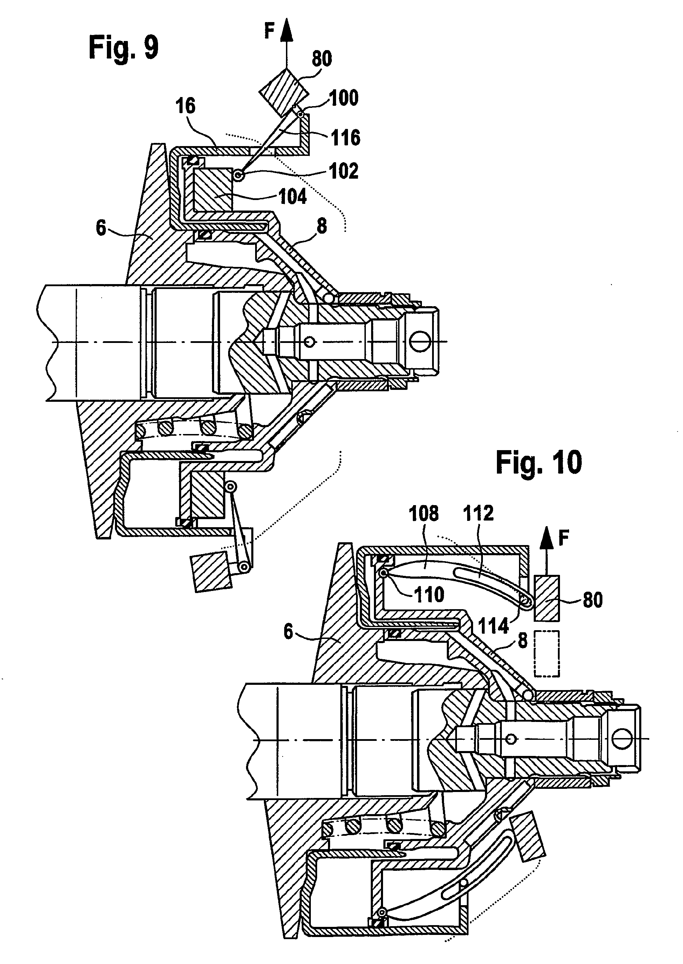

Bei der Ausführungsform gemäß Fig. 9 ist der Massekörper 80 derart an einem Hebel 116 befestigt, dass er den bei 100 an der Ringwand 16 angelenkten und sich über eine Rolle 102 an einer Fläche 104 des Stützrings 8 abstützenden Hebel mit zunehmender Fliehkraft F zunehmend in Uhrzeigerrichtung drängt, wodurch die Kegelscheibe 6 nach rechts gedrängt wird.

Bei Ausführungsform gemäß Fig. 10 ist der Massekörper 80 am Ende eines Hebels 108 befestigt, der bei 110 am Stützring 8 angelenkt ist und einen insgesamt von links oben nach rechts unten gerichteten Längsschlitz 112 bzw. eine Längsnut aufweist, in der ein am freien Ende der Ringwand 16 befestigter Bolzen 114 geführt ist. Wie unmittelbar ersichtlich, führt auch bei dieser Ausführungsform die Zentrifugalkraft F dazu, dass auf die Kegelscheibe 6 eine nach rechts gerichtete Kraft ausgeübt wird.

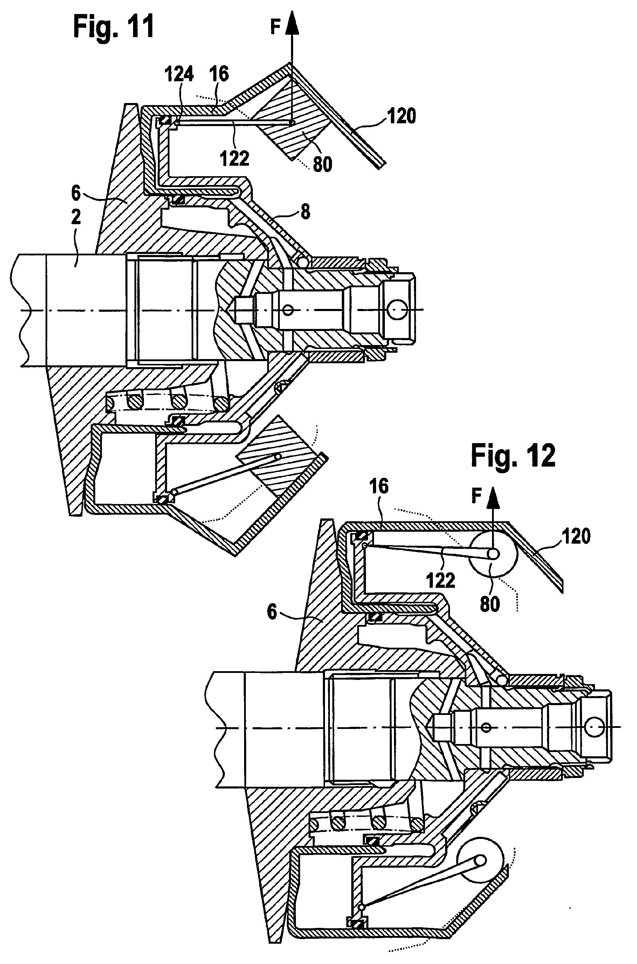

Bei der Ausführungsform gemäß Fig. 11 endet die Ringwand 16 in einer radial einwärts gerichteten Schrägfläche 120, längs der sich der über einen Hebel bzw. eine Stange 122 bei 124 an dem Stützring 8 gelagerte Massekörper 80 bewegen kann. Wie unmittelbar ersichtlich, wird die Schrägfläche 120 durch die von den Druckräumen her auf die Kegelscheibe 6 nach links aufgebrachte Kraft in Anlage an den Massekörper 80 gedrängt. Mit zunehmender Fliehkraft F setzt der Massekörper 80, der sich längs der Schrägfläche 120 radial auswärts bewegen will, dieser Kraft eine Gegenkraft entgegen. Es versteht sich, dass die Schrägfläche 120 als eine konusförmige Haube um die Welle 2 herum ausgebildet sein kann, an der sich mehrere Massekörper 80, die um den Umfang verteilt sind, abstützen.

Die Ausführungsform gemäß Fig. 12 entspricht der, der Fig. 11 mit dem Unterschied, dass der Massekörper 80 durch eine Kugel gebildet ist, die starr mit der Stange 122 verbunden oder an der Stange 122 gelagert sein kann. Es versteht sich, dass die Kugel auch durch einen Zylinder ersetzt sein kann oder durch einen Massekörper mit zur Schrägfläche 120 hin konvexer Oberfläche.

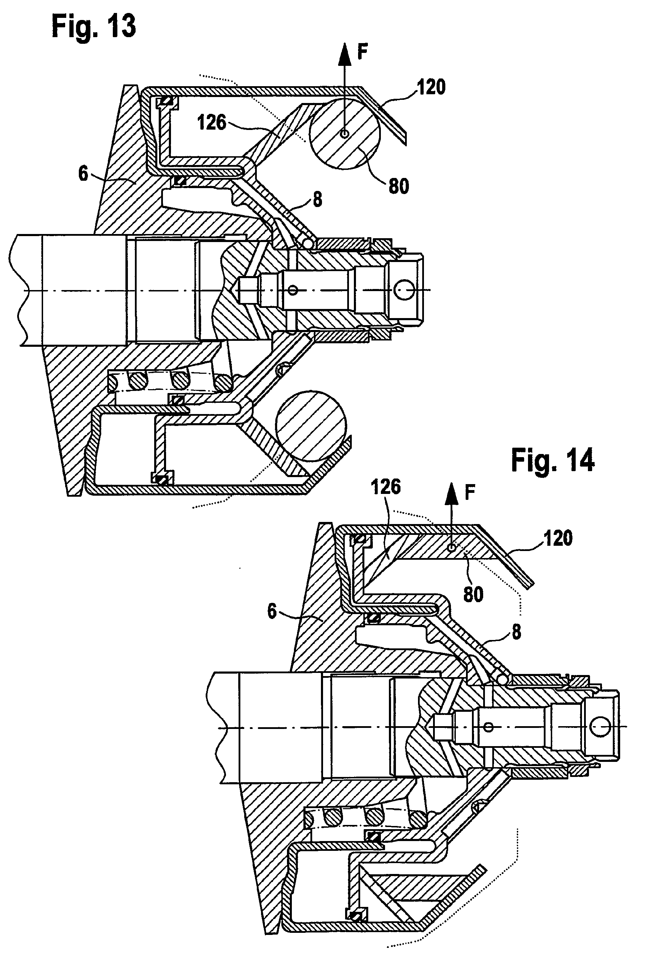

Bei der Ausführungsform gemäß Fig. 13 ist zusätzlich zu der am Ende der Ringwand 16 ausgebildeten Schrägfläche 120 an dem Stützring 8 eine weitere Schrägfläche 126 bzw. eine sich konisch erweiternde Haube angebracht. Zwischen den radial auswärts aufeinander zulaufenden Schrägflächen 120 und 126 ist der Massekörper 80, im dargestellten Beispiel als Kugel ausgebildet, angeordnet. Wie unmittelbar ersichtlich, hat der Massekörper 80 infolge der Fliehkraft F das Bestreben, die Schrägfläche 126 von der Schrägfläche 120 zu entfernen, wodurch auf die Kegelscheibe 6 eine nach rechts gerichtete Kraft ausgeübt wird.

Die Ausführungsform gemäß Fig. 14 unterscheidet sich von der der Fig. 13 dadurch, dass der Massekörper 80 nicht als Kugel, sondern im Querschnitt trapezförmig ausgebildet ist, wobei die Schrägung der Seitenflächen des Trapezes der Neigung der Schrägflächen 120 bzw. 126 entspricht. Die Funktion der Anordnung gemäß Fig. 14 entspricht der Fig. 13.

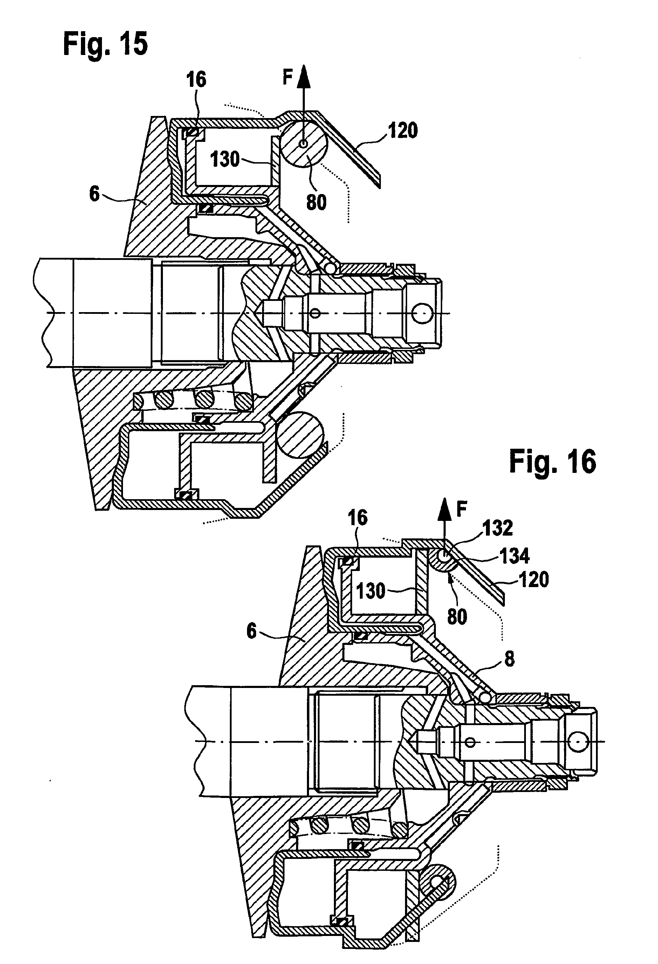

Die Ausführungsform gemäß Fig. 15 entspricht der der Fig. 13 mit dem Unterschied, dass die Schrägfläche 126 durch eine radial verlaufende Fläche 130 ersetzt ist.

Die Ausführungsform gemäß Fig. 16 entspricht der, der Fig. 15 mit dem Unterschied, dass der Massekörper aus einem inneren Zylinder und einem äußeren Zylinder besteht, wobei der innere Zylinder als Welle 132 durch den äußeren Zylinder 134 gesteckt ist. Der innere Zylinder bzw. die Welle 132 ist etwas länger als der äußere Zylinder 134 und stützt sich an der fest mit der Kegelscheibe 6 verbundenen Schrägfläche 120 ab, wohingegen sich der äußere Zylinder an der radialen Wand 130 abstützt, die starr mit dem Stützring 8 verbunden ist. Durch die beiden Bauteile des Massekörpers wird erreicht, dass der Massekörper wie ein Gleitlager, jedoch mit Reibung, wirkt, da die Welle 132 sich relativ zum äußeren Zylinder 134 verdrehen kann.

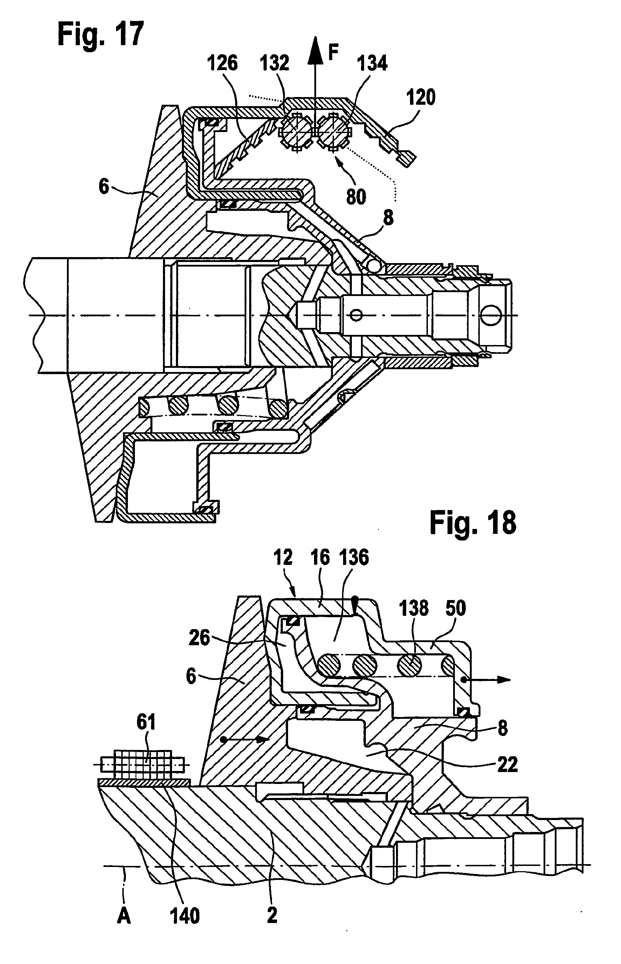

Die Ausführungsformen gemäß Fig. 17 entspricht der der Fig. 13 und 14 mit dem Unterschied, dass der Massekörper zwei Zahnräder 132 und 134 aufweist, die einander kämmen und dass die Schrägflächen 120 und 126 mit Verzahnungen versehen sind, in die die Verzahnungen der Zahnräder 132 und 134 eingreifen. Gegenüber den Ausführungen gemäß Fig. 13 und 14 wird ein Verrutschen vermieden.

Auch mit Umschlingungsgetrieben ausgerüstete Fahrzeuge müssen abschleppbar sein, beispielsweise, weil die das Getriebe betätigende Hydraulik defekt ist. Bekannt ist, mittels Federn die beweglichen Kegelscheiben in Richtung auf die Festscheiben zu drücken, so dass das Umschlingungsmittel in reibschlüssiger Anpressung an den Kegelscheiben ist und nicht rutscht. Eine solche Feder ist beispielsweise in Fig. 1 die Feder 52.

Dagegen wird gemäβ einer Ausführungsform beim Abschleppen, d.h. beim Antreiben des abtriebsseitigen Kegelscheibenpaars, vom Fahrzeug aus ein anderer Weg begangen. Bei Ausfall des Hydraulikdruckes werden die Kegelscheiben wenigstens eines Kegelscheibenpaares, bevorzugt des abtriebsseitigen Kegelscheibenpaares, derart voneinander entfernt, dass das Umschlingungsmittel bzw. die Umschlingungskette auf der bevorzugt abtriebsseitigen, mit den Rädern des abgeschleppten Fahrzeugs mitdrehenden Abtriebswelle des Kegelscheibenumschlingungsgetriebes gleitet. Ein Vorteil gegenüber der herkömmlichen Lösung liegt darin, dass die Umschlingungskette eine wohldefinierte Lage einnimmt, unabhängig davon, wie schnell abgeschleppt wird. Dieser Zustand kann sehr einfach und damit kostengünstig realisiert werden.

Fig. 18, deren Ansicht der der Fig. 1 entspricht, zeigt einen Ausschnitt eines abtriebsseitigen Kegelscheibenpaars einer solchen Ausführungsform. Das ringtopfartige Wandteil 12 ist starr mit der relativ zur Welle 2 axial verschiebbaren Kegelscheibe 6 verbunden. Zwischen der Kegelscheibe 6 und dem Stützring 8 ist eine innere Druckkammer 22 ausgebildet. Zwischen dem Stützring 8 und dem Wandteil 12 ist eine äußere Druckkammer 26 ausgebildet. Die Ringwand 16 des Wandteils 12 ist über eine Haube 50, die gegenüber einer Fläche des Stützrings 8 gleitend abgedichtet ist, verlängert, so dass eine weitere Kammer 136 gebildet ist. In der Kammer 136 stützt sich zwischen dem Stützring 8 und der Haube 50 eine Feder 138 ab, die die Haube 50 und damit die Kegelscheibe 6 in Richtung der Pfeile, d.h. weg von der nicht dargestellten, starr mit der Welle 2 verbundenen Festscheibe, drückt. Bei funktionsfähigem Hydrauliksystem überdrückt der Druck in den Druckkammern 22 und 26 die Feder 138. Bei Ausfall des Hydrauliksystems bewegt die Feder 138 die Kegelscheibe gem. der Fig. nach rechts, so dass die Umschlingungskette 61 in unmittelbare Anlage an eine Außenfläche der Welle 2 kommt und reibungsgünstig auf dieser rutschen kann. Vorteilhaft ist, die Außenfläche der Welle 2 zumindest in diesem Bereich mit einer Beschichtung 140 aus Gleitmaterial zu versehen, so dass die Reibung vermindert und die Dauerhaltbarkeit erhöht ist.

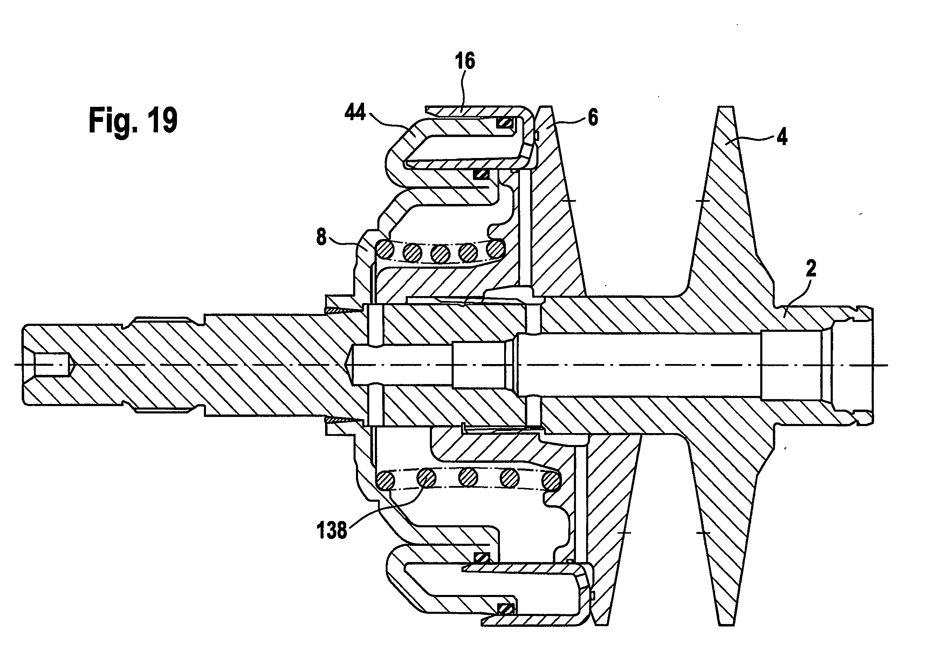

Die Figur 19 zeigt ein Kegelscheibenpaar der Antriebsseite. In diesem Ausführungsbeispiel sind der Stützring 8 und das äußere Ringteil 44 als ein Bauteil zusammengeführt.

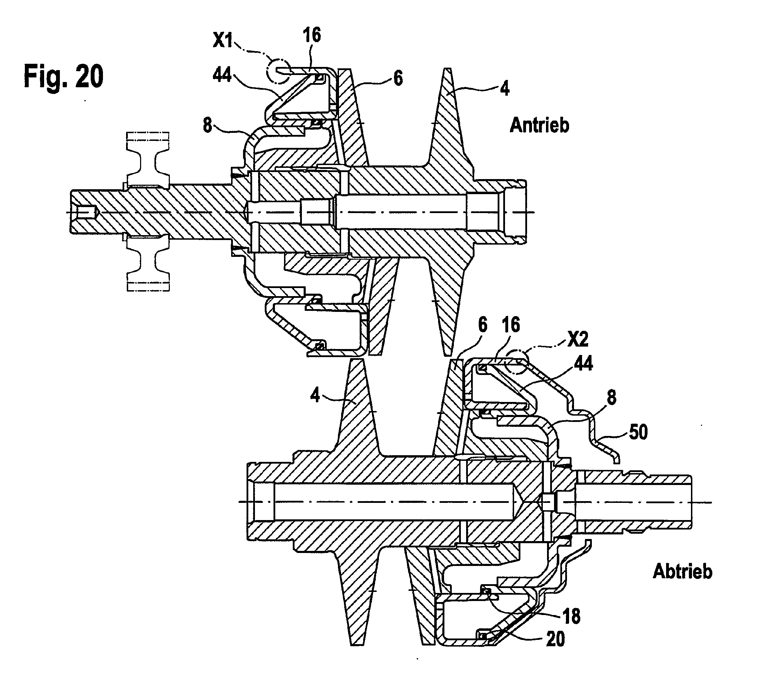

Ein komplettes Kegelscheibenumschlingungsgetriebe ist aus der Figur 20 ersichtlich. Hieraus ist die baugleiche Ausführung der Bauteile wie des Stützringes 8, des äußeren Ringteiles 44, der Ringwand 16 sowie der axial verschiebbaren Kegelscheibe 6 ersichtlich. Die Haube 50 ist optional an beiden Scheibensätzen anbringbar. Für die Möglichkeit, dass der Scheibensatz keine Abdeckung in Form der Haube 50 erhält, ist das Ende der Ringwand 16 gemäß X1 mit einer Fase versehen. Für den Fall der Abdeckung des Scheibensatzes mit der Haube 50 ist gemäß X2 eine entsprechende Aufnahmemöglichkeit in Form beispielsweise einer Nut, die der Wandstärke der Haube 50 entspricht, am Ende der Ringwand 16 vorzusehen

Es versteht sich, dass die beschriebe Konstruktion in vielfältiger Weise abgeändert werden kann und nicht auf Systeme beschränkt ist, die mit zwei Druckkammern arbeiten.

Es können bei Druckausfall nur die Scheiben des abtriebsseitigen Kegelscheibenpaars (bevorzugte Lösung) voneinander entfernt werden, oder die des antriebsseitigen Kegelscheibenpaars oder die beider Kegelscheibenpaare voneinander entfernt werden. Zum voneinander Entfernen der Kegelscheiben eines Kegelscheibenpaars kann eine Feder, beispielsweise Schraubenfeder (wie dargestellt), Tellerfeder usw. verwendet werden, die an geeigneter Stelle zwischen der Welle bzw. dem Stützring und der Kegelscheibe bzw. einem axial starr mit der Kegelscheibe verbundenen Bauteil wirkt. Zum Zurückziehen der Kegelscheibe kann an Stelle oder zusätzlich zu einer Feder ein mit Fliehkraft arbeitendes System (ähnlich dem der Fig. 6 bis 17) und/oder ein zusätzliches hydraulisches System verwendet werden, das beispielsweise die Kammer 136 mit Druck beaufschlagt.

In Unteransprüchen verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbstständigen, gegenständlichen Schutzes für die Merkmalskombinationen der rückbezogenen Unteransprüche zu verstehen.

Die Ausführungsbeispiele sind nicht als Einschränkung der Erfindung zu verstehen. Vielmehr sind im Rahmen der vorliegenden Offenbarung zahlreiche Abänderungen, und Modifikationen möglich, insbesondere solche Varianten, Elemente und Kombinationen und/oder Materialien, die zum Beispiel durch Kombination oder Abwandlung von einzelnen in Verbindung mit den in der allgemeinen Beschreibung und Ausführungsformen sowie den Ansprüchen beschriebenen und in den Zeichnungen enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie Herstell-, Prüf- und Arbeitsverfahren betreffen.

## Patentansprüche

1. Kegelscheibenumschlingungsgetriebe, enthaltend
eine Welle (2),
eine vorzugsweise einteilig mit der Welle (2) ausgebildete Kegelscheibe (4),
eine mit der Welle (2) drehfest und axial verschiebbar verbundene Kegelscheibe (6),
einen im Abstand von einer Rückseite der verschiebbaren Kegelscheibe (6) an der Welle axial unverschiebbar befestigten Stützring (8),
eine radial innere, zwischen der Kegelscheibe (6) und dem Stützring (8) gebildete, in axialer Richtung veränderbare Druckkammer (22), die zur Verschiebung der Kegelscheibe über einen in der Welle ausgebildeten Durchlass mit Druckmittel beaufschlagbar ist, und
eine radial äußere, in axialer Richtung veränderbare Druckkammer (26), die zur Verschiebung der Kegelscheibe (6) über einen in der Welle (2) ausgebildeten weiteren Durchlass (34) mit Druckmittel beaufschlagbar ist, wobei die Druckkammern durch eine axial gerichtete zylindrische Ringwand (14) voneinander getrennt sind,
wobei sich die radial äußere Druckkammer vollständig außerhalb des radialen Bereiches der radial inneren Druckkammer befindet, **dadurch gekennzeichnet, dass** der in der Welle (2) ausgebildete weitere Durchlass (34) über einen in der verschiebbaren Kegelscheibe (6) ausgebildeten Durchlass (38) mit der radial äußeren Druckkammer (26) verbunden ist.

2. Kegelscheibenumschlingungsgetriebe nach Anspruch 1, wobei der weitere in der Welle (2) ausgebildete Durchlass (34) über einen zwischen der Kegelscheibe und der Welle (2) ausgebildeten Ringraum (36) in den in der verschiebbaren Kegelscheibe (6) ausgebildeten Durchlass (38) führt.

3. Kegelscheibenumschlingungsgetriebe nach Anspruch 1 oder 2, wobei die radial äußere Druckkammer (26) zur Kegelscheibe (6) hin durch den Boden (24) eines ringtopfartigen Wandteils (12) mit einer radial inneren und einer radial äußeren axialen Ringwand (16, 14) begrenzt ist, welche Ringwände (16, 14) relativ zum Stützring (8) unter Abdichtung axial beweglich sind, und der in der Kegelscheibe (6) ausgebildete Durchlass (38) durch eine Öffnung (40) des Wandteils (12) in die radial äußere Druckkammer (26) führt.

4. Kegelscheibenumschlingungsgetriebe nach einem der Ansprüche 1 bis 3, wobei der Stützring (8) aus einem radial inneren und einem radial äußeren Ringteil (42, 44) zusammengesetzt ist, wobei Flächen des radial äußeren Ringteils (44) die radial äußere Druckkammer (26) begrenzen.

5. Kegelscheibenumschlingungsgetriebe nach Anspruch 4, wobei die Ringteile (42, 44) als ein integrales Bauteil ausgebildet sind.

6. Kegelscheibenumschlingungsgetriebe nach Anspruch 4, wobei die Ringteile Blechformteile (42, 44) sind, die durch Presssitz miteinander verbunden sind.

7. Kegelscheibenumschlingungsgetriebe nach Anspruch 5 oder 6, wobei das radial äußere Ringteil (44) bei Beaufschlagen der radial äußeren Druckkammer (26) mit Druck in Anlage an das radial innere Ringteil (42) gedrängt wird.

8. Kegelscheibenumschlingungsgetriebe nach einem der Ansprüche 4 bis 7, wobei zwischen dem radial inneren Ringteil (42) und der Kegelscheibe (6) eine Schraubenfeder (52) ohne plangeschliffene Endwindungen angeordnet ist.

9. Kegelscheibenumschlingungsgetriebe nach einem der Ansprüche 3 und 4 bis 8, **dadurch gekennzeichnet, dass** die axial verschiebbare Kegelscheibe, der Stützring, die äußere Ringwand sowie das äußere Ringteil jeweils baugleich für die Antriebs- und Abtriebsseite des Getriebes ausgeführt sind.

10. Kegetscheibenumschlingungsgetriebe nach einem der vorhergehenden Ansprüche, **dadurch gekennzeichnet, dass** eine Haube sowohl am antriebsseitigen als auch am abtriebsseitigen Scheibensatz angebracht werden kann.

11. Kegelscheibenumschlingungsgetriebe nach einem der Ansprüche 3 bis 9 und 10, **dadurch gekennzeichnet, dass** zur Anbringung der Haube das Ende der radial äußeren Ringwand entsprechend ausgebildet ist.

12. Kegelscheibenumschlingungsgetriebe nach Anspruch 11, wobei der Stützring (8) mit der Welle (2) verschweißt (64) ist.

13. Kegelscheibenumschlingungsgetriebe nach Anspruch 11, wobei der Stützring (8) an der Welle (2) mittels wenigstens eines Bauteils (66) axial formschlüssig festgelegt ist, das in eine im Außenumfang der Welle (2) und eine im Innenumfang des Stützrings (8) ausgebildete Ausnehmung (68, 70) eingreift.

## Claims

1. A belt-driven conical-pulley transmission, containing a shaft (2), a conical disk (4), preferably formed in a single piece with the shaft (2), a conical disk (6) that is connected with the shaft in a rotationally fixed and axially displaceable connection, a support ring (8) that is attached to the shaft with an immovable connection at a distance from a back side of the movable conical disk (6), a radially inner pressure chamber (22), formed between the conical disk (6) and the support ring (8), changeable in the axial direction, which can be pressurized with a means of pressure through a passage formed in the shaft to move the conical disk, and a radially outer pressure chamber (26), changeable in the axial direction, which can be pressurized with a means of pressure through an additional passage (34) formed in the shaft (2) to move the conical disk, where the pressure chambers are separated from each other by an axially directed cylindrical ring wall (14), where the radially outer pressure chamber is located completely outside of the radial area of the radially inner pressure chamber, **characterized in that** the additional passage (34) formed in the shaft (2) is connected to the radially outer pressure chamber (26) through a passage (38) formed in the displaceable conical disk (6).

2. The belt-driven conical pulley transmission according to Claim 1, wherein the additional passage (34) formed in the shaft (2) leads through a ring chamber (36) formed between the conical disk and the shaft (2) into the passage (38) formed in the movable conical disk (6).

3. The belt-driven conical-pulley transmission according to Claim 1 or 2, wherein the radially outer pressure chamber (26) is bounded in the direction of the conical disk (6) by the floor (24) of a ring-pot-like wall part (12) with a radially inner and a radially outer axial ring wall (14, 16), which ring walls (14, 16) are axially displaceable relative to the support ring (8) with sealing, and the passage (38) formed in the conical disk (6) leads through an opening (40) of the wall part (12) into the radially outer pressure chamber (26).

4. The belt-driven conical-pulley transmission according to one of Claims 1 through 3, wherein the support ring (8) is assembled from a radially inner and a radially outer ring piece (42, 44), where surfaces of the radially outer ring piece (44) bound the radially outer pressure chamber (26).

5. The belt-driven conical pulley transmission according to Claim 4, wherein the ring pieces (42, 44) are designed as an integral component.

6. The belt-driven conical pulley transmission according to Claim 4, wherein the ring pieces are shaped sheet metal parts (42, 44) which are connected with each other by press fit.

7. The belt-driven conical-pulley transmission according to Claim 5 or 6, wherein the radially outer ring piece (44) is forced into contact against the radially inner ring piece (42) when pressure is applied to the radially outer pressure chamber (26).

8. The belt-driven conical-pulley transmission according to one of Claims 4 through 7, wherein a helical spring (52) without face-ground end coils is positioned between the radially inner ring piece (42) and the conical disk (6).

9. The belt-driven conical-pulley transmission according to one of Claims 3 and 4 through 8, **characterized in that** the axially displaceable conical disk, the support ring, the outer ring wall and the outer ring piece are each constructed identically for the drive side and the power take-off side of the transmission.

10. The belt-driven conical-pulley transmission according to one of the preceding claims, **characterized in that** a hood can be installed on both the drive-side and the takeoff-side set of disks.

11. The belt-driven conical-pulley transmission according to one of Claims 3 through 9 and 10, **characterized in that** the end of the radially outer ring wall is appropriately constructed for installing the hood.

12. The belt-driven conical pulley transmission according to Claim 11, wherein the support ring (8) is welded (64) to the shaft (2).

13. The belt-driven conical pulley transmission according to Claim 11, wherein the support ring (8) is fixed on the shaft (2) in an axially positive attachment by means of at least one component (66) which engages with recesses (68, 70) formed in the outer circumference of the shaft (2) and the inner circumference of the support ring (8).

## Revendications

1. Transmission à variation continue du type à poulies coniques et à courroie comprenant :
- un arbre (2),
- une poulie conique (4) configurée, de préférence, en formant une seule et même pièce avec l'arbre (2),
- une poulie conique (6) reliée à l'arbre (2), en étant fixe en rotation et mobile axialement,
- une bague d'appui (8) placée à distance d'une face arrière de la poulie conique mobile (6) et fixée sur l'arbre en étant non mobile axialement,
- une chambre de pression intérieure radiale (22) formée entre la poulie conique (6) et la bague d'appui (8) et pouvant être modifiée dans la direction axiale, chambre de pression qui, pour le déplacement de la poulie conique, peut être alimentée par un moyen de pression, via un passage formé dans l'arbre, et
- une chambre de pression extérieure radiale (26) pouvant être modifiée dans la direction axiale, chambre de pression qui, pour le déplacement de la poulie conique (6), peut être alimentée par un moyen de pression, via un autre passage (34) formé dans l'arbre (2),
où les chambres de pression sont séparées l'une de l'autre par une paroi annulaire cylindrique (14) orientée axialement,
où la chambre de pression extérieure radiale se trouve complètement à l'extérieur de la zone radiale de la chambre de pression intérieure radiale,
**caractérisée en que** l'autre passage (34) formé dans l'arbre (2) est relié à la chambre de pression extérieure radiale (26), par un passage (38) formé dans la poulie conique mobile (6).

2. Transmission à variation continue du type à poulies coniques et à courroie selon la revendication 1, où l'autre passage (34) formé dans l'arbre (2) conduit au passage (38) formé dans la poulie conique mobile (6), via un espace annulaire (36) formé entre la poulie conique et l'arbre (2).

3. Transmission à variation continue du type à poulies coniques et à courroie selon la revendication 1 ou 2, où la chambre de pression extérieure radiale (26) est délimitée, par rapport à la poulie conique (6), par le fond (24) d'une partie de paroi (12) en forme de coupelle annulaire, comprenant à chaque fois une paroi annulaire axiale, intérieure (14) dans le sens radial et extérieure (16) dans le sens radial, lesquelles parois annulaires (14, 16) sont mobiles axialement par rapport à la bague d'appui (8), en faisant étanchéité, et le passage (38) formé dans la poulie conique (6) conduit, à travers une ouverture (40) de la partie de paroi (12), à la chambre de pression extérieure radiale (26).

4. Transmission à variation continue du type à poulies coniques et à courroie selon l'une quelconque des revendications 1 à 3, où la bague d'appui (8) est composée d'une pièce annulaire intérieure radiale (42) et d'une pièce annulaire extérieure radiale (44), où les surfaces de la pièce annulaire extérieure radiale (44) délimitent la chambre de pression extérieure radiale (26).

5. Transmission à variation continue du type à poulies coniques et à courroie selon la revendication 4, où les pièces annulaires (42, 44) sont configurées comme une pièce de structure d'un seul tenant.

6. Transmission à variation continue du type à poulies coniques et à courroie selon la revendication 4, où les pièces annulaires sont des pièces moulées en tôle (42, 44) qui sont jointes l'une à l'autre par un ajustement sans jeu.

7. Transmission à variation continue du type à poulies coniques et à courroie selon la revendication 5 ou 6, où la pièce annulaire extérieure radiale (44), lorsque la chambre de pression extérieure radiale (26) est alimentée en pression, est poussée en appui sur la pièce annulaire intérieure radiale (42).

8. Transmission à variation continue du type à poulies coniques et à courroie selon l'une quelconque des revendications 4 à 7, où un ressort hélicoïdal (52) sans spires d'extrémités à surface plane rectifiée est disposé entre la pièce annulaire intérieure radiale (42) et la poulie conique (6).

9. Transmission à variation continue du type à poulies coniques et à courroie selon l'une quelconque des revendications 3 et 4 à 8, **caractérisée en ce que** la poulie conique mobile axialement, la bague d'appui, la paroi annulaire extérieure ainsi que la pièce annulaire extérieure sont réalisées, à chaque fois, suivant un mode de construction identique, pour le côté entraînement et sortie de la transmission.

10. Transmission à variation continue du type à poulies coniques et à courroie selon l'une quelconque des revendications précédentes, **caractérisée en ce qu'**un capot peut être fixé sur le jeu de poulies, aussi bien côté entraînement que côté sortie.

11. Transmission à variation continue du type à poulies coniques et à courroie selon l'une quelconque des revendications 3 à 9 et 10, **caractérisée en ce que**, pour la fixation du capot, l'extrémité de la paroi annulaire extérieure radiale est configurée en conséquence.

12. Transmission à variation continue du type à poulies coniques et à courroie selon la revendication 11, où la bague d'appui (8) est soudée (64) à l'arbre (2).

13. Transmission à variation continue du type à poulies coniques et à courroie selon la revendication 11, où la bague d'appui (8) est fixée axialement, par sûreté de forme, sur l'arbre (2), au moyen d'au moins une pièce de structure (66) qui s'engage dans un creux (68) formé dans la circonférence extérieure de l'arbre (2) et dans un creux (70) formé dans la circonférence intérieure de la bague d'appui (8).
